(19) Europäisches Patentamt
European Patent Office
Office européen des brevets

(11) EP 0 627 461 B1

(12) # EUROPÄISCHE PATENTSCHRIFT

(45) Veröffentlichungstag und Bekanntmachung des Hinweises auf die Patenterteilung:
**18.02.1998 Patentblatt 1998/08**

(21) Anmeldenummer: **94108062.4**

(22) Anmeldetag: **26.05.1994**

(51) Int Cl.[6]: **C08K 5/00**, C08L 33/06
// (C08L33/06, 25:12), (C08K5/00, 5:3435, 5:526, 5:3475, 5:00)

(54) **Spannungsrissbeständige Formmassen auf der Basis von PMMA/SAN-Blends**

Moulding compositions resistant to stress cracks based on PMMA/SAN-blends

Compositions de moulage résistantes au fendillement par contrainte à base de mélanges PMMA/SAN

(84) Benannte Vertragsstaaten:
**BE CH DE ES FR GB IT LI NL**

(30) Priorität: **01.06.1993 DE 4318077**

(43) Veröffentlichungstag der Anmeldung:
**07.12.1994 Patentblatt 1994/49**

(73) Patentinhaber: **BASF Aktiengesellschaft**
**67063 Ludwigshafen (DE)**

(72) Erfinder:
- **Deckers, Andreas, Dr.**
  **D-55234 Flomborn (DE)**
- **Wagner, Daniel, Dr.**
  **D-67098 Bad Duerkheim (DE)**
- **Zimmer, Guenter, Dr.**
  **D-55129 Mainz (DE)**

(56) Entgegenhaltungen:
**EP-A- 0 508 173**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 627 461 B1

Printed by Jouve, 75001 PARIS (FR)

## Beschreibung

Die vorliegende Erfindung betrifft spannungsrißbeständige Formmassen, enthaltend im wesentlichen

A) 49 bis 99 Gew.-% eines Polymerisates, erhältlich durch Polymerisation eines $C_1$-$C_{20}$-Alkylesters der Methacryl- oder Acrylsäure oder Mischungen solcher Ester,
B) 0,95 bis 50 Gew.-% eines Polymerisates, erhältlich durch Polymerisation eines Monomerengemisches aus

$b_1$) 75 bis 82 Gew.-% eines vinylaromatischen Monomeren und
b2) 18 bis 25 Gew.-% Acrylnitril oder Methacrylnitril oder eine Mischung davon,

sowie
C) 0,05 bis 1 Gew.-% einer Mischung, enthaltend

$c_1$) ein Triarylphosphit der allgemeinen Formel I

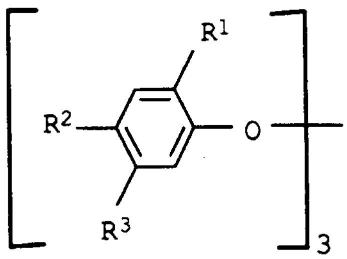

I

in der $R^1$ und $R^2$ für $C_1$-$C_{12}$-Alkyl, $C_5$-$C_8$-Cycloalkyl, $C_6$-$C_{10}$-Aryl oder $C_6$-$C_{10}$-Aryl-$C_1$-$C_4$-alkyl, wobei die Arylreste bis zu dreifach mit $C_1$-$C_4$-Alkyl substituiert sein können, und $R^3$ für Wasserstoff und $C_1$-$C_4$-Alkyl steht;
$c_2$) ein Amin der allgemeinen Formel II

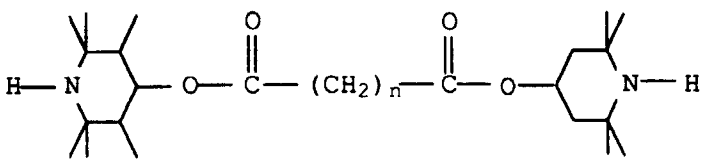

II

in der n für die Werte 2 bis 10 steht,
$c_3$) ein Benzotriazol der allgemeinen Formel III

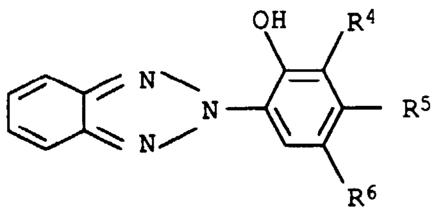

III

in der $R^4$, $R^5$ und $R^6$ die Bedeutung von $R^1$ haben und gewünschtenfalls
$c_4$) ein Phenol der allgemeinen Formel IV

$$AB_k \qquad \text{IV}$$

wobei k 1, 2 oder 4 bedeutet und, falls k = 1 ist, A für $-COOR^7$, $-CONHR^7$,

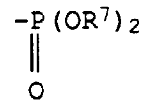

steht, wobei $R^7$ $C_1$-$C_{21}$-Alkyl bedeutet, und falls k = 2 ist, A für $-CONH-(CH_2)_n-CONH-$,

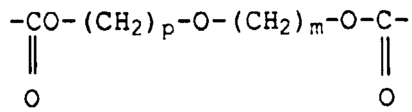

oder

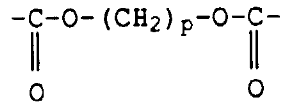

steht, wobei p und m ganze Zahlen von 1 bis 10 bedeuten, und falls k = 4 ist, A für

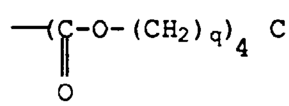

steht, wobei q eine ganze Zahl von 1 bis 4 bedeutet, und B für

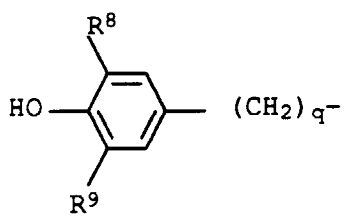

steht,

wobei $R^8$ und $R^9$ für Wasserstoff, Methyl oder tert. Butyl stehen.

Außerdem betrifft die Erfindung ein Verfahren zur Herstellung dieser spannungsrißbeständigen Formmassen, ihre Verwendung zur Herstellung von Formkörpern sowie Formkörper, enthaltend diese spannungsrißbeständigen Formmassen.

Polymethylmethacrylat (PMMA) zeichnet sich bekanntermaßen durch eine sehr gute Bewitterungsstabilität, eine hohe Transparenz und hohe Kratzfestigkeit aus. Im Vergleich zu anderen transparenten thermoplastischen Kunststoffen, neigt PMMA jedoch bei Einwirkung von Chemikalien (z. B. Alkoholen, Reinigungsmitteln etc.) zur Ausbildung von Spannungsrissen, die teilweise zum Bruch des Formteils führen können. Aus diesem Grund sind dem PMMA einige potentielle Anwendungen verschlossen.

Es hat nicht an Versuchen gefehlt, die Chemikalienbeständigkeit von Acryl-Kunststoffen zu verbessern. So wird z. B. von Röhm, Darmstadt, ein Terpolymer aus MMA/S/ MSA (MMA - Methylmethacrylate, S - Styrol, MSA = Maleinsäureanhydrid) (Plexiglas@ HW 55) mit einer erhöhten Wärmeformbeständigkeit sowie einer verbesserten Resistenz gegenüber verschiedenen Lösungsmitteln angeboten.

Bekannterweise läßt sich die Spannungsrißbeständigkeit von MMA-Polymeren auch durch Copolymerisation mit Acrylnitril verbessern (Chemie, Physik und Technologie der Kunststoffe, Bd. 9, Acryl- und Methacrylverbindungen, Springer-Verlag, 1967, S. 254 ff.) Nachteilig hierbei ist allerdings die verringerte Lichtdurchlässigkeit in Folge von Entmischungen während der Polymerisation.

Blends aus PMMA und SAN-(Styrol-Acrylnitril)-Copolymeren mit einem Acrylnitrilgehalt von ca. 19 - 25 Gew.-% sind in der Regel molekulardispers mischbar und ergeben transparente Massen (Polymer, 28, (1987), S. 1177). Aus früheren Untersuchungen ist bekannt, daß solche Mischungen ebenfalls eine deutlich geringere Neigung zur Spannungsrißkorrosion aufweisen als "reines" PMMA (EP-A 508173). Ein Mischungsverhältnis von 75 Gew.-% PMMA : 25 Gew.-% SAN hat sich dabei als optimal erwiesen.

Auf Grund des relativ hohen Styrol- bzw. Acrylnitrilanteils weisen diese Mischungen im Vergleich zum PMMA nur eine geringe Bewitterungsstabilität auf. Die Zugabe der üblichen Stabilisatoren gegen UV-Licht wie z. B. Benzotriazole, Benzophenone oder Verbindungen des HALS-(hindered amine light stabilizer)-Typs bewirken zwar im allgemeinen eine Verringerung der Vergilbungsrate, doch leidet unabhängig davon die Spannungsrißbeständigkeit im Laufe der Bestrahlungsdauer. Auch Kombinationen aus einem Benzotriazol und einer HALS-Verbindung bewirken nach bisherigen Beobachtungen keinen synergistischen Effekt (siehe EP 243 319) der Chemikalienbeständigkeit.

Aufgabe der vorliegenden Erfindung war es daher, spannungsrißbeständige Formmassen, mit einer verbesserten Bewitterungsstabilität zur Verfügung zu stellen.

Demgemäß wurden die eingangs definierten spannungsrißbeständigen Formmassen gefunden.

Die als Komponente A) enthaltenden Polymerisate sind erfindungsgemäß erhältlich durch Polymerisation eines $C_1$-$C_{20}$-Alkylesters der Methacryl- oder Acrylsäure oder Mischungen solcher Ester, vorzugsweise durch Polymerisation eines Monomerengemisches, bestehend aus

| | | |
|---|---|---|
| a1) | 80 bis 100 Gew.-%, | bevorzugt 90 bis 99 Gew.-%, eines $C_1$-$C_{20}$-Alkylesters der Methacrylsäure, und |
| a2) | 0 bis 20 Gew.-%, | bevorzugt 1 bis 10 Gew.-%, eines $C_1$-$C_{20}$-Alkylesters der Acrylsäure. |

Als $C_1$-$C_{20}$-Alkylester der Methacrylsäure kommen bevorzugt die $C_1$-$C_4$-Alkylester wie Methylmethacrylat ("MMA"), Ethylmethacrylat, n-, i-Propylmethacrylat, n-Butylmethacrylat, Isobutylmethacrylat und tert.-Butylmethacrylat in Betracht, wobei Methylmethacrylat besonders bevorzugt ist, sowie Mischungen dieser Monomere.

Als $C_1$-$C_{20}$-Alkylester der Acrylsäure verwendet man bevorzugt die $C_1$-$C_4$-Alkylester wie Methylacrylat ("MA"), Ethylacrylat, n-, i-Propylacrylat, n-Butylacrylat, Isobutylacrylat und tert.-Butylacrylat, wobei Methylacrylat besonders bevorzugt ist, sowie Mischungen dieser Monomeren.

Als besonders vorteilhaft haben sich nach den bisherigen Beobachtungen Polymerisate aus 99 Gew.-% Methylmethacrylat und 1 Gew.-% Methylacrylat mit einem Molekulargewicht (Gewichtsmittelwert $M_w$) von 60.000 bis 300.000 g/mol, insbesondere 80.000 bis 150.000 g/ mol, sowie Polymerisate aus 96 Gew.-% Methylmethacrylat und 4 Gew.-% Butylacrylat mit einem Molekulargewicht (Gewichtsmittelwert $M_w$) von 60.000 bis 300.000 g/mol, insbesondere 110.000 g/mol, erwiesen.

Die Menge der Komponente A, bezogen auf das Gesamtgewicht der transparenten, schlagzähen Formmassen, beträgt erfindungsgemäß 49 bis 99, bevorzugt 60 bis 80 Gew.-%.

Die Herstellung der Komponente A) führt man im allgemeinen nach bekannten Polymerisationsverfahren wie Masse-, Lösungs-, Emulsions- oder Perlpolymerisation durch. Solche Verfahren sind beispielsweise im Kunststoffhandbuch, Bd. 9, Vieweg und Esser; Polymethylmethacrylat, Carl-Hanser-Verlag, München 1975, S. 36 ff beschrieben.

Die als Komponente B) enthaltenen Copolymerisate (SAN-Copolymere) sind erhältlich durch Polymerisation eines Monomerengemisches aus

| | |
|---|---|
| 75 bis 82 Gew.-%, | vorzugsweise 78 bis 81 Gew.-%, eines vinylaromatischen Monomeren, und |
| 18 bis 25 Gew.-%, | vorzugsweise 19 bis 22 Gew.-%, Acrylnitril oder Methacrylnitril oder deren Mischungen. |

Außerhalb dieses Bereiches der Zusammensetzung erhält man in der Regel bei Verarbeitungstemperaturen über 240°C trübe Formteile, die Bindenähte aufweisen.

Als vinylaromatische Monomere eignen sich vorzugsweise Styrol, $\alpha$-Methystyrol, tert.-Butylstyrol, Monochlorstyrol und Vinyltoluol, besonders bevorzugt Styrol und $\alpha$-Methylstyrol.

Der Zusatz von Acrylnitril und/oder Methacrylnitril bewirkt in der Regel eine Erhöhung der Spannungsrißbeständigkeit.

Als besonders geeignet haben sich SAN-Copolymere mit einem Molekulargewicht (Gewichtsmittelwert $M_w$) von 60 000 bis 300 000 g/mol, vorzugsweise von 100 000 bis 200 000 g/mol, erwiesen, die nach dem in der GB-PS 14 72 195 beschriebenen Verfahren hergestellt wurden.

Die Menge der Komponente B), bezogen auf das Gesamtgewicht der transparenten, schlagzähen Formmassen, beträgt erfindungsgemäß 0,95 bis 50, bevorzugt 20 bis 40 Gew.-%.

Die Herstellung der Komponente B) führt man in der Regel nach bekannten Polymerisationsverfahren wie Masse-, Lösungs-, Emulsions- oder Perlpolymerisation durch. Solche Verfahren sind beispielsweise in Kunststoffhandbuch, Hrsg. Vieweg und Daumiller, Band V; Polystyrol, Carl-Hanser-Verlag, München 1969, S. 124 ff. und in der GB-PS 14 72 195 beschrieben.

Als Komponente C) setzt man eine Mischung ein, enthaltend die Komponenten $c_1$) bis $c_3$ und gewünschtenfalls $c_4$).

Als Komponente $c_1$) verwendet man erfindungsgemäß Triarylphosphite der allgemeinen Formel I

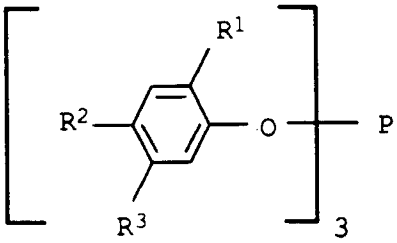

I

in denen $R^1$ und $R^2$ für $C_1$-$C_{12}$-Alkyl wie Methyl, Ethyl, Propyl, 1-Methylethyl, n-Butyl, 1-Methylpropyl, 2-Methylpropyl, 1,1-Dimethylethyl, n-Pentyl, 1-Methylbutyl, 2-Methylbutyl, 3-Methylbutyl, 1,2-Dimethylpropyl, 1,1-Dimethylpropyl, 2,2-Dimethylpropyl, 1-Ethylpropyl, n-Hexyl, 1-Methylpentyl, 2-Methylpentyl, 3-Methylpentyl, 4-Methylpentyl, 1,2-Dimethylbutyl, 1,3-Dimethylbutyl, 2,3-Dimethylbutyl, 1,1-Dimethylbutyl, 2,2-Dimethylbutyl, 3,3-Dimethylbutyl, 1,1,2-Trimethylpropyl, 1,2,2-Trimethylpropyl, 1-Ethylbutyl, 2-Ethylbutyl, 1-Ethyl-2-methylpropyl, n-Heptyl, 1-Methylhexyl, 2-Methylhexyl, 3-Methylhexyl, 4-Methylhexyl, 5-Methylhexyl, 1-Ethylpentyl, 2-Ethylpentyl, 1-Propylbutyl, Octyl, Nonyl, Decyl, Undecyl und Dodecyl, vorzugsweise in 1-Position (a) verzweigte $C_3$-$C_{12}$-Alkylreste, insbesondere $C_3$-$C_7$-Alkylreste, wie 1-Methylethyl, 1-Methylpropyl, 1,1-Dimethylethyl, 1-Methylbutyl, 1,2-Dimethylpropyl, 1,1-Dimethylpropyl, 1-Ethylpropyl, 1-Methylpentyl, 1,2-Dimethylbutyl, 1,3-Dimethylbutyl, 1,1-Dimethylbutyl, 1,1,2-Trimethylpropyl, 1,2,2-Trimethylpropyl, 1-Ethylbutyl, 1-Ethyl-2-methylpropyl, 1-Methylhexyl, 1-Ethylpentyl und 1-Propylbutyl sowie 1,1,3,3-Tetramethylbutyl, 1,1,2,2,5,5-Hexamethylhexyl,

$C_5$-$C_8$-Cycloalkyl wie Cyclopentyl, Cyclohexyl, Cycloheptyl und Cyclooctyl, bevorzugt Cyclohexyl,

$C_6$-$C_{10}$-Aryl und $C_6$-$C_{10}$-Aryl-$C_1$-$C_4$-Alkyl, deren Arylreste bis zu dreifach mit $C_1$-$C_4$-Alkyl substituiert sein können, wie Phenyl, Naphthyl oder 2,2-Dimethylbenzyl, stehen, und $R^3$ Wasserstoff und $C_1$-$C_4$-Alkyl wie Methyl, Ethyl, n-, i-Propyl, n-, i-, sek.- und tert.-Butyl, bevorzugt Wasserstoff und Methyl, bedeutet.

Beispiele für Verbindungen I, denen im Hinblick auf die vorliegende Erfindung besondere Bedeutung zukommt, sind die im Handel erhältlichen Tris-(2,4-di-tert.-butylphenyl)-phosphit (Irgafos®168, Ciby-Geigy) und Tris(nonylphenyl) phosphit, bevorzugt Tris-(2,4-di-tert.-butylphenyl)-phosphit.

Als Komponente $c_2$) setzt man erfindungsgemäß ein Amin der allgemeinen Formel II

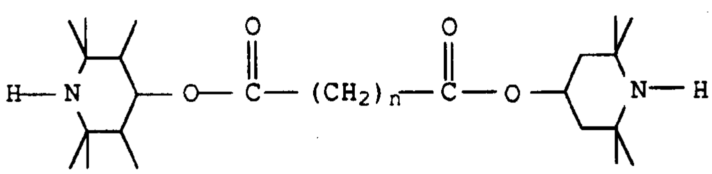

II

in der n für die Werte 2 bis 10, bevorzugt 2 bis 8, steht. Verbindungen dieses Typs sind auch unter der Bezeichnung HALS (hindered amine light stabilizer)-Verbindungen bekannt und im Handel erhältlich.

Ein Beispiel für Verbindungen II, dem im Hinblick auf die vorliegende Erfindung besondere Bedeutung zukommt, ist Bis-(2,2,6,6-tetramethyl-4-piperidyl)-sebacat (unter dem Namen Tinuvin®770 DF (Ciba Geigy) im Handel).

Als Komponente $c_3$) setzt man erfindungsgemäß ein Benzotriazol der allgemeinen Formel III ein

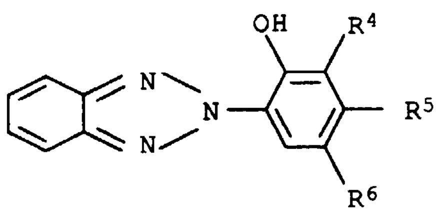

III

in der $R^4$, $R^5$ und $R^6$ die Bedeutung von $R^1$ haben.

Beispiele für Verbindungen III, denen im Hinblick auf die vorliegende Erfindung besondere Bedeutung zukommt,

sind 2-(2'-Hydroxy-5'-methyl-phenyl)-benzotriazol (unter dem Namen Tinuvin®P (Ciba Geigy) im Handel erhältlich), oder 2-(2'-Hydroxy-3'-dodecyl-5'-methyl-decyl)benzotriazol.

Als Komponente $c_4$) kann man als Antioxidans ein Phenol der allgemeinen Formel IV

$$AB_k \qquad IV$$

wobei k 1, 2 oder 4 bedeutet und, falls k = 1 ist, A für $-COOR^7$, $-CONHR^7$,

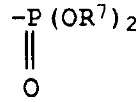

steht, wobei $R^7$ $C_1$-$C_{21}$-Alkyl bedeutet, und falls k = 2 ist, A für $-CONH-(CH_2)_n-CONH-$,

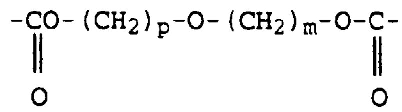

oder

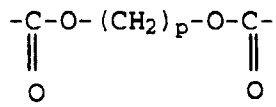

steht, wobei p und m ganze Zahlen von 1 bis 10 bedeuten, und falls k = 4 ist, A für

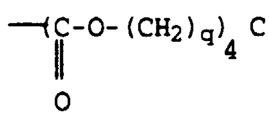

steht, wobei q eine ganze Zahl von 1 bis 4 bedeutet, und
B für

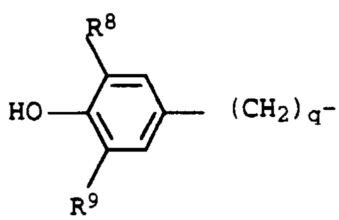

steht, wobei $R^8$ und $R^9$ für Wasserstoff, Methyl oder tert. Butyl stehen, einsetzen.

Die Zugabe der Komponente c4) kann in einigen Fallen zu einer weiteren Verbesserung der Spannungsrißbeständigkeit nach Bewitterung führen.

Beispiele für Verbindungen IV, denen im Hinblick auf die vorliegende Erfindung besondere Bedeutung zukommt,

sind Octadecyl-3-(3,5-di-tert.-butyl-4-hydroxyphenyl)-propionat (unter dem Namen Irganox®1076 (Ciba Geigy) im Handel), sowie

| | |
|---|---|
| IRGANOX 1098 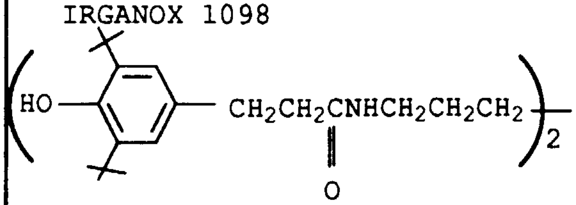 | IRGANOX 1010 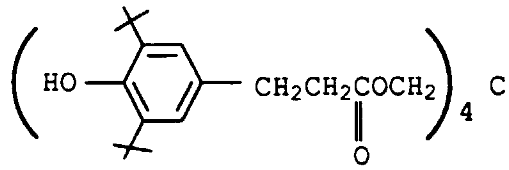 |
| IRGANOX 1222 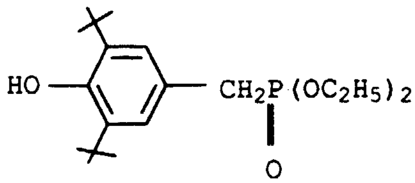 | IRGANOX 245 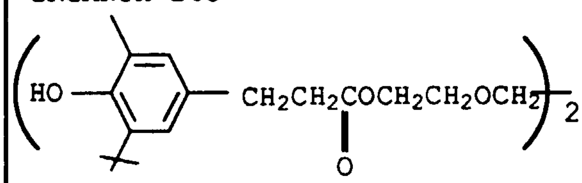 |
| IRGANOX 259 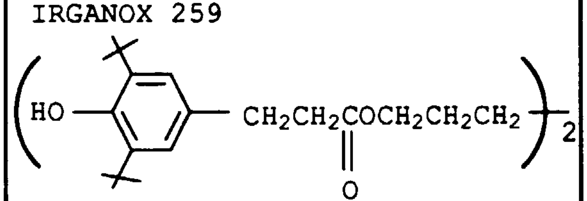 | |

Erfindungswesentlich ist die Anwesenheit aller drei Komponenten $c_1$), $c_2$) und $c_3$) in der Komponente C). Fehlt wenigstens eine der Komponenten $c_1$) bis $c_3$), so tritt kein synergistischer Effekt hinsichtlich der Verbesserung der Spannungsrißbeständigkeit nach Bewitterung auf.

Die Mengen der Komponenten $c_1$) bis $c_3$) liegen jeweils im Bereich von 1 bis 50, bevorzugt von 30 bis 50 Gew.-%, bezogen auf die Summe der Mengen der Komponenten $c_1$) bis $c_3$), wobei sich die einzelnen Mengen zu 100 addieren.

Die Menge der Komponente $c_4$) wählt man im Bereich von 0 bis 25 Gew.-%, vorzugsweise 10 bis 25 Gew.-%, bezogen auf die Gesamtmenge der Komponenten $c_1$) bis $c_3$).

Die Menge der Komponente C), bezogen auf das Gesamtgewicht der spannungsrißbeständigen Formmassen, beträgt erfindungsgemäß 0,05 bis 1, vorzugsweise 0,1 bis 0,5 Gew.-%.

Die erfindungsgemäßen Formmassen können, bezogen auf das Gemisch der Komponenten A) bis C), noch bis zu 20 Gew.-% üblicher Zusatzstoffe enthalten. Als solche kommen beispielsweise in Betracht: Farbstoffe;

Gleit- und Entformungsmittel, die man in der Regel bis zu 3 Gew.-% der thermoplastischen Masse zusetzen kann, beispielsweise Stearinsäure, Stearate, Stearylalkohol, Stearinsäurealkylester und -amide sowie Ester des Pentaerythrits mit langkettigen Fettsäuren und Antistatika.

Das Vermischen der Komponenten A) bis C) kann in der Regel in den üblichen Vorrichtungen zur Schmelzvermischung wie Doppelschneckenextruder durchgeführt werden. Die Komponenten werden hierbei im allgemeinen bei Temperaturen im Bereich von 200 bis 300°C, verarbeitet. Prinzipiell ist es auch möglich, Lösungen oder Suspensionen der erfindungsgemäßen Komponenten zu vermischen und das Lösungs- oder Suspensionsmittel anschließend zu entfernen.

Die Verarbeitungsbreite der erfindungsgemäßen, transparenten, schlagzähen Formmassen oberhalb 200°C ist nach den bisherigen Beobachtungen nicht durch Unverträglichkeitserscheinungen eingeschränkt. Die Mischungen der Komponenten A) bis C) kann man zwischen 200 und 300°C ohne Einbußen in der Transparenz, ohne merkbare Vergilbung und ohne eine lästige Geruchsbildung verarbeiten.

Aus den erfindungsgemäßen Formmassen kann man durch Spritzgießen oder Blasformen Formkörper herstellen. Man kann die Formmassen auch verpressen, kalandrieren, extrudieren oder vakuumformen.

Die erfindungsgemäßen spannungsrißbeständigen Formmassen weisen gegenüber solchen aus dem Stand der Technik eine sehr gute Spannungsrißbeständigkeit bei Bewitterung auf.

Beispiele

Für die nachstehenden Beispiele und Vergleichsbeispiele wurden folgende Bestandteile eingesetzt:

Verwendete Komponenten:

A: Copolymerisat aus 99 Gew.-Tl. Methylmethacrylat (MMA) und 1 Gew.-Tl. Methylacrylat, $M_w$ = 110.000 (bestimmt durch Lichtstreuung in Chloroform, Viskositätszahl VZ = 74 ml/g; gemessen in 0,26 gew.-%iger Lösung in $CHCl_3$)
B: Copolymerisat aus Styrol und Acrylnitril im Verhältnis 81 : 19 ($n^{25}{}_D$ = 1,575), $M_w$ = 250.000 (bestimmt durch Lichtstreuung in $CHCl_3$)
$C_1$: Tris=(2,4-di-tert.-butylphenyl)-phosphit (Irgafos®168 der Ciba Geigy)
$C_2$: Bis-(2,2,6,6-tetramethyl-4-piperidyl)-sebacat (Tinuvin®770 DF der Ciba Geigy)
$C_3$: 2-(2'-Hydroxy-5'-methyl-phenyl)-benzotriazol (Tinuvin®P der Ciby Geigy)
$C_4$: Octadecyl-3-(3,5-ditert.-butyl-4-hydroxyphenyl)-propionat (Irganox®1076 der Ciba Geigy)

Zur Herstellung der erfindungsgemäßen Formmassen wurden die Komponenten A) bis C) in einen Extruder (ZSK-25 von Werner & Pfleiderer, Schneckendurchmesser 25 mm; Länge:Durchmesser = 30) entsprechend ihrem Mischungsverhältnis mit einem Durchsatz von 10 kg/h bei einer Temperatur von 240°C aufgeschmolzen und bei 200 U/min vermischt. Die jeweilige Mischung wurde als Strang ausgetragen, gekühlt und granuliert.

Anschließend wurde jeweils ein Teil der Granulate auf einer Spritzgußmaschine (Allrounder, Fa. Arburg) bei einer Temperatur von 200°C zu Schulterstäben, wie sie für Festigkeitsmessungen nach DIN 53 455 verwendet werden, verarbeitet.

Für die Prüfung der Spannungsrißbeständigkeit diente eine Vorrichtung (s. Figur), in die ein Normschulterstab mit den Maßen

- Länge 149 mm (nach der Temperung; vor der Temperung: 150 mm)
- Breite 20 mm (am Ende)
- Breite 10 mm (Stabmitte)
- Höhe 4 mm

an einem Ende horizontal fixiert wurde. Eine Auflagestelle, bestehend aus einem senkrecht zur Längsrichtung und parallel zur Querrichtung des Prüfkörpers angeordneten Stab (Durchmesser 5 mm) in einer Entfernung von 70 mm vom fixierten Ende des Prüfkörpers, diente als zweite Halterung.

Am freien Ende des Prüfkörpers wurde ein Gewicht von 509 g angebracht. Damit wurde an der Auflagestelle des Stabes eine Biegespannung (aB) von aB = 147,87 N/cm$^2$ erzeugt. Die Berechnung erfolgte nach

$$\sigma_B = \frac{F \cdot l \cdot 6}{b \cdot h^2}$$

(aus Technische Formelsammlung, K. Gieck-Verlag, Heilbronn, 1972, S. P3)
wobei

$\sigma_B$ = Biegespannung in N/cm$^2$
b = Probenbreite in cm (gemessen in der Mitte der Schulterstäbe)
h = Höhe der Probe
l = Stützweite in cm
F = Kraft in N = 509 g ∗ 980,665 *10$^{-5}$ N/g = 4,9916 N

Vor dem Test wurden die Schulterstäbe 20 h bei einer Temperatur von 10°C unterhalb ihrer Vicat-Temperaturen (Luft) in einem mit Silicagel enthaltenden Trockenschrank getempert, um spannungsfreie Schulterstäbe zu erhalten. Nach der Temperung wurden die Probestücke auf die Meßtemperatur von 23°C in einem Silicagel enthaltenden Exsikkator abgekühlt und bis zur Messung dort aufbewahrt.

Die so vorbehandelten Prüfkörper wurden zuerst 10 min mit der oben angegebenen Kraft belastet und dann, unter weiterer Belastung, mit einer Mischung aus Wasser und Isopropanol (50 Vol.-%/50 Vol.-%) zur Erzeugung der Spannungskorrosion versetzt.

Das Isopropanol wurde dabei auf die Oberfläche des beanspruchten Teils des Schulterstabes in Höhe des Auflagestabes aufgebracht. Um einen guten Kontakt des Prüfmediums mit der Kunststoffoberfläche zu gewährleisten, wurde an dieser Stelle ein Filterpapierstück der Länge 1 cm und der Breite 1 cm gelegt. Dieses Filterpapier wurde während des Meßzeitraumes mit Isopropanol als Prüfflüssigkeit stets feucht gehalten.

Gemessen wurde der Zeitraum zwischen dem Beginn des Anfeuchtens und dem Auftreten des ersten Spannungsrisses. Jeweils 10 Prüfkörper der jeweiligen Mischungen wurden für eine Testreihe eingesetzt. Von den gemessenen Zeiten wurde jeweils der arithmetische Mittelwert gebildet.

Die Witterungsbeständigkeit wurde nach DIN 53.384-A-8-60 durchgeführt, indem die Prüfkörper zunächst mit UV-Licht jeweils 0, 500, 1000 und 2000 h belichtet wurden. Dann wurde anschließend die Spannungsrißbeständigkeit wie oben beschrieben ermittelt.

Dabei drückt sich die Witterungs-Beständigkeit durch die Spannungsrißbeständigkeit nach Belichtung aus. Die Spannungsrißbeständigkeit bedeutet, daß die Prüfkörper erst nach der in der Tabelle angegebenen Zeit den ersten Spannungsriß aufwiesen.

Die Ergebnisse sind in der Tabelle zusammengefaßt.

Tabelle: Spannungsrißbeständigkeit und Witterungsbeständigkeit

| Bsp. | Zusammensetzung der Formmassen (Gew.-%) | | | | | | Spannungsrißbeständigkeit (sec) (nach 0, 500, 1000 und 2000 h Belichtung) | | | |
|---|---|---|---|---|---|---|---|---|---|---|
| | A | B | $C_1$ | $C_2$ | $C_3$ | $C_4$ | 0 | 500 | 1000 | 2000 |
| 1 | 74,9600 | 24,9905 | 0,0165 | 0,0165 | 0,0165 | - | 750 | 720 | 700 | 680 |
| 2 | 74,9200 | 24,9810 | 0,0330 | 0,0330 | 0,0330 | - | 680 | 650 | 600 | 540 |
| 3 | 74,9200 | 24,9800 | 0,0250 | 0,0250 | 0,0500 | - | 690 | 670 | 625 | 590 |
| 4 | 74,9200 | 24,9800 | 0,0250 | 0,0250 | 0,0250 | 0,0250 | 700 | 690 | 690 | 670 |
| zum Vergleich | | | | | | | | | | |
| 5 | 74,9200 | 24,9800 | - | 0,0500 | 0,0500 | - | 690 | 490 | 275 | 110 |
| 6 | 74,8500 | 24,9500 | 0,1000 | - | 0,1000 | - | 680 | 310 | 175 | 120 |
| 7 | 74,9200 | 24,9800 | 0,0800 | - | - | 0,0200 | 700 | 80 | 70 | 50 |

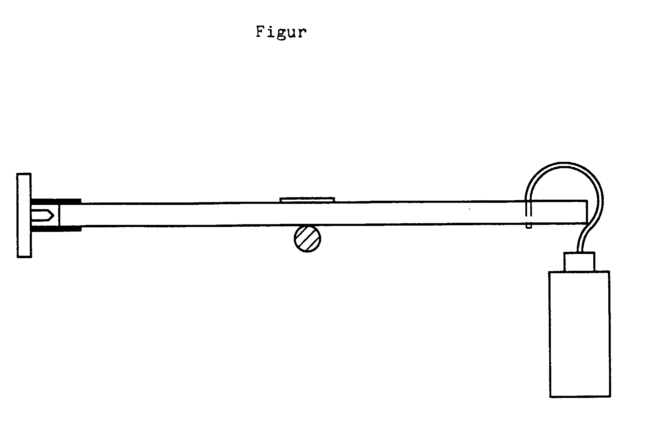

## Patentansprüche

1. Spannungsrißbeständige Formmassen, enthaltend im wesentlichen

A) 49 bis 99 Gew.-% eines Polymerisates, erhältlich durch Polymerisation eines $C_1$-$C_{20}$-Alkylesters der Methacryl- oder Acrylsäure oder Mischungen solcher Ester,
B) 0,95 bis 50 Gew.-% eines Polymerisates, erhältlich durch Polymerisation eines Monomerengemisches aus

$b_1$) 75 bis 82 Gew.-% eines vinylaromatischen Monomeren und
$b_2$) 18 bis 25 Gew.-% Acrylnitril oder Methacrylnitril oder eine Mischung davon,

sowie
C) 0,05 bis 1 Gew.-% einer Mischung, enthaltend

$c_1$) ein Triarylphosphit der allgemeinen Formel I

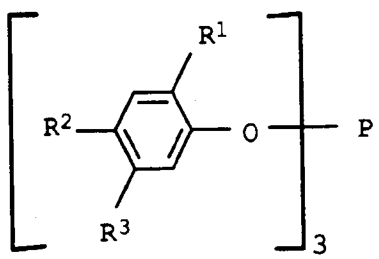

I

in der $R^1$ und $R^2$ für $C_1$-$C_{12}$-Alkyl, $C_5$-$C_8$-Cycloalkyl, $C_6$-$C_{10}$-Aryl oder $C_6$-$C_{10}$-Aryl-$C_1$-$C_4$-alkyl, wobei die Arylreste bis zu dreifach mit $C_1$-$C_4$-Alkyl substituiert sein können, und $R^3$ für Wasserstoff und $C_1$-$C_4$-Alkyl steht;
$c_2$) ein Amin der allgemeinen Formel II

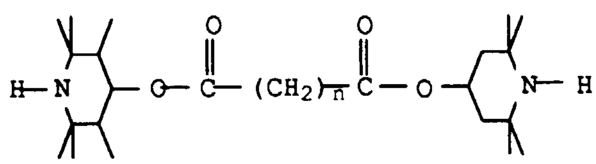

II

in der n für die Werte 2 bis 10 steht,
$c_3$) ein Benzotriazol der allgemeinen Formel III

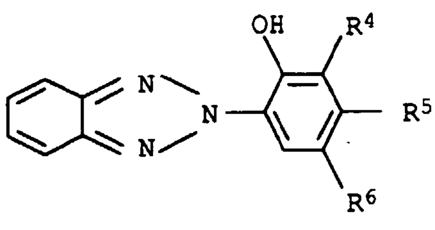

III

in der $R^4$, $R^5$ und $R^6$ die Bedeutung von $R^1$ haben;
$c_4$) ein Phenol der allgemeinen Formel IV

$$AB_k \qquad IV$$

wobei k 1, 2 oder 4 bedeutet und, falls k = 1 ist, A für $-COOR^7$, $-CONHR^7$,

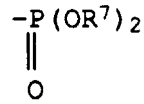

steht, wobei $R^7$ $C_1$-$C_{21}$-Alkyl bedeutet, und falls k = 2 ist, A für $-CONH-(CH_2)_n-CONH-$,

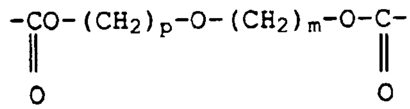

oder

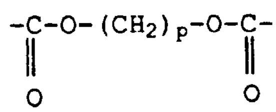

steht, wobei p und m ganze Zahlen von 1 bis 10 bedeuten, und falls k = 4 ist, A für

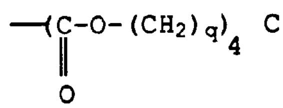

steht, wobei q eine ganze Zahl von 1 bis 4 bedeutet, und B für

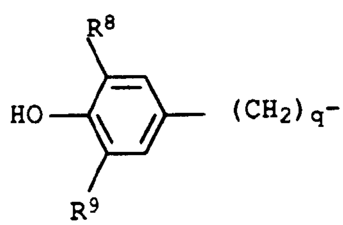

steht, wobei $R^8$ und $R^9$ für Wasserstoff, Methyl oder tert. Butyl stehen.

**2.** Spannungsrißbeständige Formmassen nach Anspruch 1, dadurch gekennzeichnet, daß die Komponenten $c_1$ bis $c_3$ jeweils in Mengen im Bereich von 1 bis 50 Gew.-% vorliegen, bezogen auf die Gesamtmenge der Komponenten $c_1$ bis $c_3$, mit der Maßgabe, daß sich die Gesamtsumme der Mengen zu 100 addiert, und wobei die Komponente $c_4$ bis zu 25 Gew.-%, bezogen auf die Gesamtmenge der Komponenten $c_1$ bis $c_3$, in der Mischung enthalten ist.

**3.** Spannungsrißbeständige Formmassen nach den Ansprüchen 1 bis 2, dadurch gekennzeichnet, daß die Komponente A) aus einem Monomerengemisch aus

| | | |
|---|---|---|
| $a_1$) | 80 bis 100 Gew.-% | eines $C_1$-$C_{20}$-Alkylesters der Methacrylsäure, und |
| $a_2$) | 0 bis 20 Gew.-% | eines $C_1$-$C_{20}$-Alkylesters der Acrylsäure |

hergestellt ist.

4. Verfahren zur Herstellung von spannungsrißbeständigen Formmassen gemäß den Ansprüchen 1 bis 3, dadurch gekennzeichnet, daß man die Komponenten A) bis C) sowie gewünschtenfalls übliche Zusatzstoffe in der Schmelze mischt.

5. Verwendung der spannungsrißbeständigen Formmassen gemäß den Ansprüchen 1 bis 3 zur Herstellung von Formkörpern.

6. Formkörper, enthaltend spannungsrißbeständige Formmassen gemäß den Ansprüchen 1 bis 3.

**Claims**

1. A molding material having stress cracking resistance and containing essentially

A) from 49 to 99% by weight of a polymer obtainable by polymerizing a $C_1$-$C_{20}$-alkyl ester of methacrylic or acrylic acid or a mixture of said esters,
B) from 0.95 to 50% by weight of a polymer obtainable by polymerizing a monomer mixture comprising

$b_1$) from 75 to 82% by weight of a vinyl aromatic monomer and
$b_2$) from 18 to 25% by weight of acrylonitrile or methacrylonitrile or a mixture thereof,

and
C) from 0.05 to 1% by weight of a mixture containing

$c_1$) a triaryl phosphite of the formula I

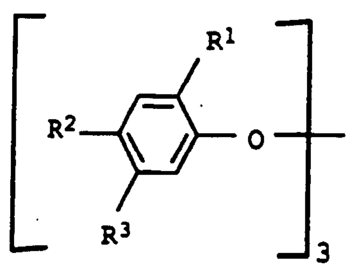

I

where $R^1$ and $R^2$ are each $C_1$-$C_{12}$-alkyl, $C_5$-$C_8$-cycloalkyl, $C_6$-$C_{10}$-aryl or $C_6$-$C_{10}$-aryl-$C_1$-$C_4$-alkyl, where the aryl radicals may be monosubstituted, disubstituted or trisubstituted by $C_1$-$C_4$-alkyl, and $R^3$ is hydrogen or $C_1$-$C_4$-alkyl,
$c_2$) an amine of the formula II

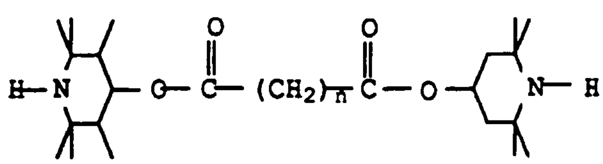

II

where n is from 2 to 10,
$c_3$) a benzotriazole of the formula III

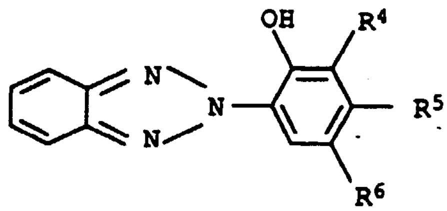

III

where $R^4$, $R^5$ and $R^6$ have the meanings of $R^1$, and
$c_4$) a phenol of the formula IV

$$AB_k \qquad IV$$

where k is 1, 2 or 4 and, if k is 1, A is $-COOR^7$, $-CONHR^7$ or

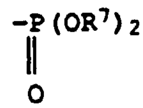

where $R^7$ is $C_1$-$C_{21}$-alkyl, and, if k is 2, A is $-CONH-(CH_2)_n-CONH-$,

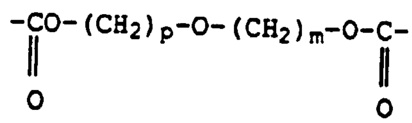

or

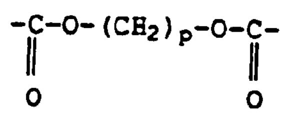

where p and m are each an integer of from 1 to 10, and, if k is 4, A is

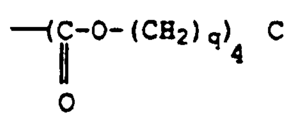

where q is an integer of from 1 to 4, and B is

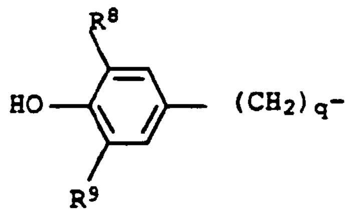

where $R^8$ and $R^9$ are each hydrogen, methyl or tert-butyl.

**2.** A molding material having stress cracking resistance, as claimed in claim 1, wherein the components $c_1$ to $c_3$ are each present in an amount of from 1 to 50% by weight, based on the total amount of components $c_1$ to $c_3$, with the proviso that the amounts sum to 100, and the mixture contains up to 25% by weight, based on the total amount of components $c_1$ to $c_3$, of component $c_4$.

**3.** A molding material having stress cracking resistance, as claimed in claim 1 or 2, wherein component A) is prepared from a monomer mixture comprising

$a_1$) from 80 to 100% by weight of a $C_1$-$C_{20}$-alkyl ester of methacrylic acid and
$a_2$) from 0 to 20% by weight of a $C_1$-$C_{20}$-alkyl ester of acrylic acid.

**4.** A process for the preparation of a molding material having stress cracking resistance, as claimed in any of claims 1 to 3, wherein the components A) to C) and, if desired, conventional additives are mixed in the melt.

**5.** Use of a molding material having stress cracking resistance, as claimed in any of claims 1 to 3, for the production of moldings.

**6.** A molding containing a molding material having stress cracking resistance, as claimed in any of claims 1 to 3.

**Revendications**

**1.** Masses à mouler résistant à la fissuration par contrainte, qui contiennent, en essence,

A) 49 à 99% en poids d'un polymère, que l'on peut obtenir par la polymérisation d'un ester alkylique en $C_1$ à $C_{20}$ de l'acide méthacrylique ou acrylique, ou de mélanges d'esters de ce genre,
B) 0,95 à 50% en poids d'un polymère, que l'on peut obtenir par la polymérisation d'un mélange de monomères constitué de

$b_1$) 75 à 82% en poids d'un monomère vinyle aromatique, et
$b_2$) 18 à 25% en poids d'acrylonitrile ou de méthacrylonitrile, ou d'un mélange de ceux-ci,

ainsi que
C) 0,05 à 1% en poids d'un mélange, qui contient :

$c_1$) un phosphite de triaryle de la formule générale I:

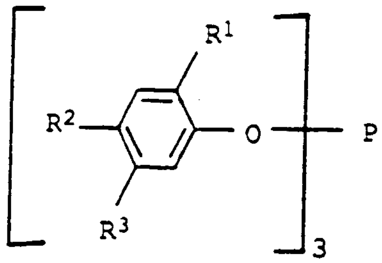

(I)

dans laquelle $R^1$ et $R^2$ représentent des radicaux alkyle en $C_1$ à $C_{12}$, cycloalkyle en $C_5$ à $C_8$, aryle en $C_6$ à $C_{10}$ ou aryl($C_1$-$C_{10}$)alkyl($C_1$-$C_4$), où les restes aryle peuvent être jusqu'à trois fois substitués par des radicaux alkyle en $C_1$ à $C_4$ et $R^3$ représente un atome d'hydrogène ou un radical alkyle en $C_1$ à $C_4$;

$c_2$) une amine de la formule générale II :

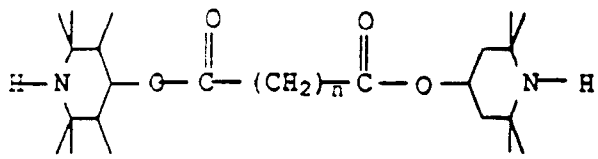

(II)

dans laquelle n a une valeur qui varie de 2 à 10,

$c_3$) un benzotriazole de la formule générale (III):

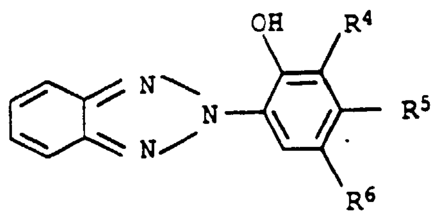

(III)

dans laquelle $R^4$, $R^5$ et $R^6$ ont les significations de $R^1$;

$c_4$) un phénol de la formule générale IV :

$$Ab_k \qquad IV$$

où k est égal à 1, 2 ou 4, au cas ou k est égal à 1, A représente $-COOR^7$, $-CONHR^7$.

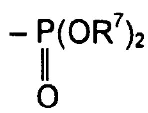

où $R^7$ représente un radical alkyle en $C_1$ à $C_{21}$, et au cas où k est égal à 2, A représente -CONH-$(CH_2)_n$-CONH-,

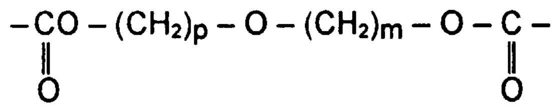

ou

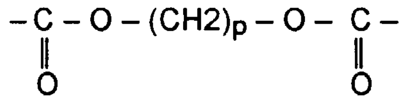

où p et m représentent des nombres entier dont les valeurs varient de 1 à 10, et au cas où k est égal à 4, A représente

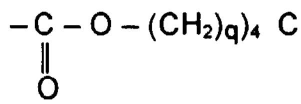

où q représente un nombre entier dont la valeur varie de 1 à 4, et
B représente

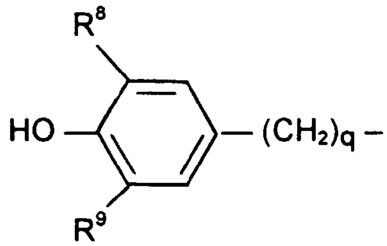

où $R^8$ et $R^9$ représentent des atomes d'hydrogène, des radicaux méthyle ou tert-butyle.

**2.** Masses à mouler résistant à la fissuration par contrainte suivant la revendication 1, caractérisées en ce que les composants ci à $c_3$ sont à chaque fois présents en proportions qui varient dans la plage de 1 à 50% en poids, par rapport à la quantité totale des composants ci à c3, avec la condition que la somme totale des proportions soit égale à 100, et où le composant $c_4$ est contenu dans le mélange en une proportion allant jusqu'à 25% en poids, par rapport à la quantité totale des composants $c_1$ à $c_3$.

**3.** Masses à mouler résistant à la fissuration par contrainte suivant les revendications 1 et 2, caractérisées en ce que le composant A) est préparé à partir d'un mélange de monomères constitué de

$a_1$) 80 à 100% en poids d'un ester alkylique en $C_1$ à $C_{20}$ de l'acide méthacrylique, et
$a_2$) 0 à 20% en poids d'un ester alkylique en C1 à C20 de l'acide acrylique.

**4.** Procédé de préparation de masses à mouler résistant à la fissuration par contrainte suivant l'une quelconque des revendications 1 à 3, caractérisé en ce que l'on mélange les composants A) à C) ainsi qu'éventuellement des additifs usuels à l'état fondu.

**5.** Utilisation des masses à mouler résistant à la fissuration par contrainte suivant l'une quelconque des revendications 1 à 3 pour la fabrication de corps ou d'articles moulés.

**6.** Corps ou articles moulés contenant des masses à mouler résistant à la fissuration par contrainte suivant l'une quelconque des revendications 1 à 3.

Figur